# EUROPEAN PATENT SPECIFICATION

(11) **EP 0 657 683 B1**
(45) Date of publication and mention of the grant of the patent: **26.05.1999**
(21) Application number: 94117689.3
(22) Date of filing: 09.11.1994
(51) Int. Cl.: F16L 51/02, F01N 7/18, F16L 27/11, F16L 27/10

(54) **Flexible vibration-damping joint, particularly for vehicle exhaust pipes**
Biegsame Vibrationsdämpfungsverbindung, insbesondere für Kraftfahrzeugabgasleitungen
Joint flexible d'amortissement des vibrations, en particulier pour un tuyau d'échappement de véhicule

(30) Priority: 09.11.1993 IT TO930245 U
(43) Date of publication of application: 14.06.1995
(73) Proprietor: FLEXIDER S.p.A., I-10156 Torino (IT)
(72) Inventor: Capra, Gian Luigi, I-10100 Torino (IT)
(74) Representative: Plebani, Rinaldo

(56) References cited:
- EP-A- 0 511 000
- EP-A- 0 681 096
- DE-A- 4 243 115
- US-A- 4 659 117
- US-A- 5 358 287

## Description

The present invention relates to a flexible vibration-damping joint for connecting pipe portions in fluidtight, mechanically "decoupled" manner, and fittable in particular to the exhaust pipe of an internal combustion engine vehicle, for connecting the end pipe portion of the exhaust manifold of the engine to the inlet pipe portion of the catalyst.

Here and hereinafter, the term "mechanically decoupled" is intended to mean the ability of the joint to mechanically connect two end-to-end pipe portions without transmitting any noticeable vibration between them, and in particular in such a manner as to protect the catalyst against vibration of the engine, while at the same time permitting relative axial and torsional movement of the connected pipe portions as a consequence, for example, of differing thermal expansion.

Numerous types of flexible joints are known for fluidtight connecting two portions of a vehicle exhaust pipe. One type features, like in e.g. US-A-4,659,117, a flexible undulated fluidtight connecting sleeve, and supporting parts fittable to the ends of the pipe portions so as to grip one another and form box type pockets housing vibration-damping pads made of compressed wire known as wire mesh. Another known type (see e.g. EP-A-0 511 000) consists simply of a flexible undulated sleeve with a flexible braided wire outer sheath, both fitted in fluidtight manner to two rigid tubular end pieces in turn fitted to the pipe portions for connection.

The first type provides for good connection and good mechanical "decoupling" of the pipe portions, but is complex in design, relatively bulky, and expensive to produce; whereas the second is compact and cheap to produce, but provides for only a limited amount of vibration damping, all of which depends on the elasticity of the undulated sleeve.

It is an object of the present invention to provide a flexible vibration-damping joint for fluidtight connecting two end-to-end pipe portions, and which at the same time is compact, cheap to produce, and provides for a good degree of vibration damping efficiency.

According to the present invention, there is provided a flexible vibration-damping joint for mechanical, fluidtight connection of two pipe portions, as claimed in claim 1.

According to a first embodiment, the vibration-damping pad is in the form of a cylindrical sleeve of such a length as to cooperate with all or at least some of the undulations of the bellows sleeve.

According to a second embodiment, the vibration-damping pad is in the form of an annular element conjugate with the contour of the bellows sleeve undulations, and is inserted in the annular gap between at least any two adjacent undulations so as to cooperate on either side with the same.

According to a third embodiment, the vibration-damping pad is in the form of an annular element fitted to a smaller-diameter, nonundulated, cylindrical portion of the bellows sleeve, and is gripped between an end undulation of the bellows sleeve and an annular shoulder on the corresponding end piece so as to grip a corresponding end portion of the braided wire sheath against the shoulder.

As such, a highly effective vibration-damping, and at any rate flexible, element is gripped firmly between parts of the braided wire sheath - possibly also gripped externally by respective portions of the end pieces - and parts of the bellows sleeve, in particular the peaks or sides of the undulations.

The resulting joint is therefore extremely straightforward in design, compact, and cheap and easy to produce, while at the same time providing for effective mechanical decoupling of the connected pipe portions: on the one hand, by absorbing part of the work load, the braided wire sheath reduces the load on the bellows sleeve while at the same time shockproofing and weatherproofing it externally; and, on the other, by virtue of inserting the wire mesh pads, the braided wire sheath in no way affects the capacity of the bellows sleeve to permit relative movement of the connected pipe portions, but limits the amount of relative movement so as to safeguard the bellows sleeve against breakage.

Finally, the wire mesh pad, inserted according to the invention between respective portions (peaks or sides) of one or more undulations and the braided wire sheath, provides for preventing, or at least greatly reducing, the transmission of vibration from one pipe portion to the other along the bellows sleeve, but without impairing the flexibility of the joint.

A number of non-limiting embodiments of the present invention will be described by way of example with reference to the accompanying drawings, in which:
Figure 1 shows a partially sectioned longitudinal view of a flexible joint in accordance with the present invention;
Figure 2 shows a variation of the Figure 1 joint;
Figures 3, 4, 5 and 6 show the same detail of four possible variations of the joint according to the present invention.

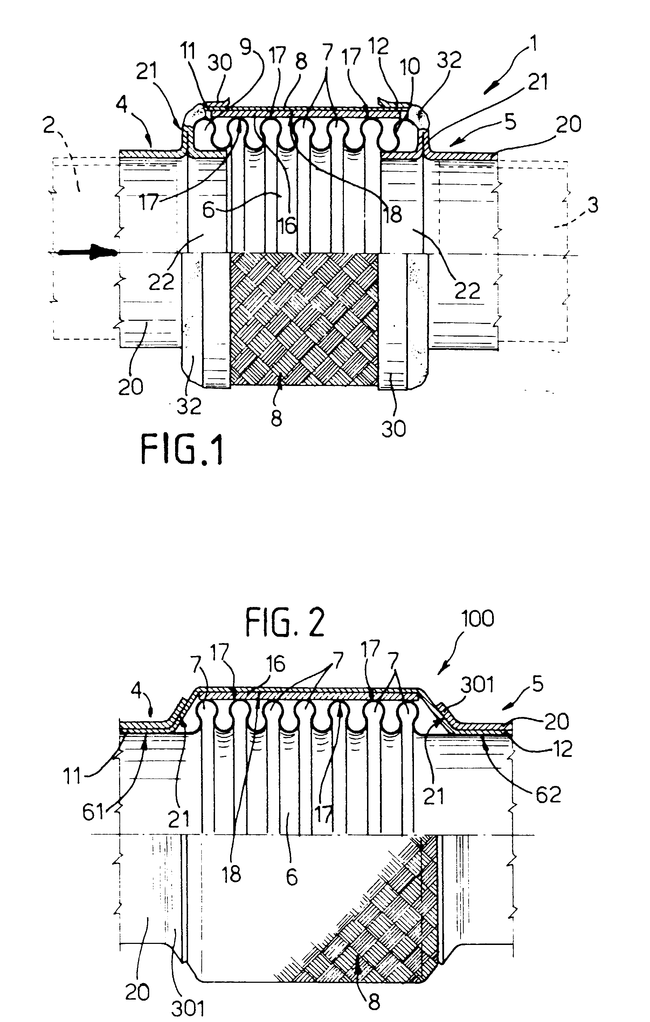

Number 1 in Figure 1 indicates a vibration-damping joint for mechanical, fluidtight connection of two pipe portions 2 and 3 (shown by the dotted lines), and in particular the exhaust manifold end portion 2 and the catalyst inlet portion 3 of a pipe forming part of a known vehicle exhaust system (not shown) and along which the exhaust gas produced by the internal combustion engine (not shown) of the vehicle flows in the direction shown by the arrow.

Joint 1 comprises a pair of tubular, substantially rigid end pieces 4 and 5 fittable, e.g. weldable, in known manner to respective opposite facing ends of pipe portions 2 and 3; a metal bellows sleeve 6 presenting a number of undulations 7 for rendering it elastically deformable; and a braided wire sheath 8 externally covering bellows sleeve 6. The opposite ends 9 and 10 of bellows sleeve 6 - in the example shown, formed by incomplete end undulations 7 - and the corresponding opposite ends 11 and 12 of sheath 8 are connected integral with respective end pieces 4 and 5 so that joint 1 forms one piece.

According to the invention, between bellows sleeve 6 and braided wire sheath 8, there is inserted at least one annular vibration-damping pad 16 made of compressed wire known as wire mesh and marketed in the form of annular pads available in any shape and size.

In the Figure 1 embodiment, vibration-damping pad 16 is in the form of a cylindrical sleeve of such a length as to cooperate with all (or only some) of undulations 7 of bellows sleeve 6, including incomplete end undulations 9 and 10; and is inserted and gripped between respective peaks 17 of undulations 7 of sleeve 6 and the substantially cylindrical, inner lateral surface 18 of braided wire sheath 8.

Each end piece 4, 5 is so formed as to comprise a cylindrical tube portion 20 for connection to a respective pipe portion 2, 3; and an axial shoulder 21 formed by permanently deforming a respective annular portion of tube portion 20. In the example shown, the portion defining shoulder 21 is a crimped intermediate portion of tube portion 20, and each tube portion 20 terminates towards sleeve 6 with a cylindrical end portion 22 having an outside diameter substantially equal to the minimum inside diameter of bellows sleeve 6. Sleeve 6 presents at least some of its end undulations 7 resting on end portions 22, and terminates with ends 9 and 10 resting against shoulders 21 - in the example shown, against the radially-outer edge of shoulders 21.

Each end piece 4, 5 comprises an annular portion 30 superimposed on corresponding end 11, 12 of sheath 8, and defined, in the Figure 1 embodiment, by a cylindrical ring or sleeve formed separately from tube portion 20 and having an inside diameter greater than the outside diameter of sleeve 6. Rings 30 are fitted externally on to an axial portion of sheath 8 substantially equal to the length of end portions 22, and are upset on sheat 8 so as to grip ends 11 and 12 of sheath 8 against peaks 17 of underlying undulations 7 and 9, 10, and so grip the end portions of pad 16 between ends 11, 12 and peaks 17 of undulations 7 and/or 9, 10 respectively. Rings 30 are also connected to adjacent shoulders 21 by respective weld beads 32 which are thick enough to also secure ends 11, 12 of sheath 8 and ends 9, 10 of sleeve 6 to the outer edge of shoulders 21 without affecting wire mesh pad 16.

Reference will now be made to Figures 2 to 6 wherein any details similar or identical to those already described are indicated for the sake of simplicity using the same numbering system.

The Figure 2 variation shows a joint 100 identical to joint 1 described above, with the exception of the following: undulations 7 of sleeve 6 are all alike, with no incomplete end undulations 9, 10; sleeve 6 terminates with two opposite ends 61, 62, each defined by a cylindrical, smaller-diameter, nonundulated portion of sleeve 6; and end pieces 4, 5 are each defined by a tube 20 upset so as to grip ends 11, 12 of sheath 8 on the cylindrical ends 61, 62 of sleeve 6 without gripping pad 16 which is shorter than sheath 8 and terminates at each end at the last undulation 7 of sleeve 6.

Moreover, the end edges of tubes 20 facing sleeve 6 are bent to form annular portions 301 which replace portions 30 in cooperating with sheath 8 and, at the same time, define shoulders 21 which, in this case however, provide solely for axially securing sheath 8.

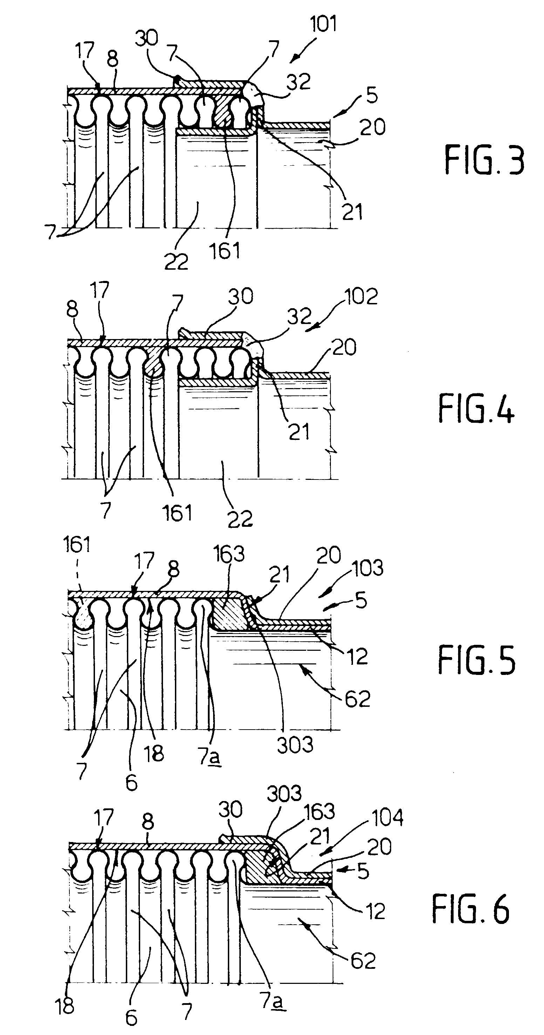

Figures 3 and 4 show two similar variations 101 and 102 of joint 1. As the joint is symmetrical both cylindrically and axially, only the top half of one end of the joint is shown in section in Figures 3 to 6.

Joints 101 and 102 in Figures 3 and 4 differ from joint 1 in that the vibration-damping pad is in the form an an annular element 161 conjugate with the contour of undulations 7 and inserted in the annular gap between at least any two adjacent undulations (the end two in Figure 3, and two intermediate undulations in Figure 4) so as to cooperate on either side with the same. End pieces 4, 5 (only end piece 5 shown) are the same as those of joint 1 in Figure 1.

Figures 5 and 6 show a further two joints 103 and 104 wherein the vibration-damping pad is in the form of an annular element 163 presenting a substantially trapezoidal cross section, and fitted on to a cylindrical, smaller-diameter, nonundulated portion 62 of each end of bellows sleeve 6. Pad 163 is gripped axially between an end undulation 7a of sleeve 6 and an annular shoulder 21 of the corresponding end piece 4, 5 (only end piece 5 shown) so as to grip against shoulder 21 a corresponding portion of end portion 11, 12 (only portion 12 shown) of sheath 8.

Sleeve 6 is the same as that of joint 100 in Figure 2; end piece 5 (like end piece 4 not shown) is defined by a tube 20 upset on cylindrical end 62 of sleeve 6 so as to grip the corresponding end portion of end 12 of sheath 8 on to cylindrical end 62; and shoulder 21 is defined by an upset, bent portion 303 of tube 20.

In the Figure 5 variation, a further wire mesh pad 161 (optional and therefore hatched in Figure 5) is preferably inserted between any two undulations 7 of bellow sleeve 6 as for joint 102 in Figure 4.

In the Figure 6 variation, portion 303 is L-shaped so as to include an annular sleeve portion 30 similar to that of Figure 1 but formed in one piece with tube 20 and which provides for externally gripping annular vibration-damping pad 163 with sheath 8 in between.

## Claims

1. A flexible vibration-damping joint (1;101;102;103;104) for mechanical, fluidtight connection of two pipe portions, in particular two portions (2,3) of a vehicle exhaust pipe; the joint comprising: a pair of substantially rigid, tubular end pieces (4,5) fittable to respective opposite facing ends of the pipe portions (2,3); a metal bellows sleeve (6) presenting a number of undulations (7) for rendering it elastically deformable, and the opposite ends (9,10) of which are connected integral with respective said end pieces (4,5); a braided wire sheath (8) externally covering the bellows sleeve (6) and also connected at opposite ends (11,12) to said end pieces (4,5); and at least one annular pad (16;161;163) made of compressed wire; **characterized in that** said annular pad (16;161;163) is inserted between the bellows sleeve (6) and the braided wire sheath (8), gripped in direct contact between the latter and at least one of the undulations (7) of the bellows sleeve (6) or at least with the peak (17) thereof, so as to act effectively as a vibration-damping element.

2. A flexible joint (1) as claimed in Claim 1, characterized in that it comprises a vibration-damping pad (16) in the form of a cylindrical sleeve of such a length as to cooperate with at least some of the undulations (7) of the bellows sleeve (6).

3. A flexible joint (101;102) as claimed in Claim 1, characterized in that it comprises at least one vibration-damping pad (161) in the form of an annular element conjugate with the contour of the undulations (7) of the bellows sleeve (6) and inserted in the annular gap between at least any two adjacent undulations (7) so as to cooperate on either side with the same.

4. A flexible joint (103;104) as claimed in Claim 1, 2 or 3, characterized in that it comprises a vibration-damping pad (163) in the form of an annular element fitted to a cylindrical, smaller-diameter, nonundulated portion (62) of the bellows sleeve (6); said pad (163) being gripped between an end undulation (7a) of the bellows sleeve (6) and an annular shoulder (21) on the corresponding end piece (4,5), so as to grip against said shoulder (21) a corresponding portion of the end portion (11,12) of the braided wire sheath (8).

5. A flexible joint (104) as claimed in Claim 4, characterized in that said vibration-damping pad (163) in the form of an annular element is gripped externally, with the braided wire sheath (8) in between, by an annular sleeve portion (30) ofthe corresponding end piece (4,5).

6. A flexible joint as claimed in any one of the foregoing Claims, characterized in that each said end piece (4,5) comprises a cylindrical tube portion (20) for connection to a respective said pipe portion (2,3); and an axial shoulder (21) formed by permanently deforming a respective annular portion of said cylindrical tube portion (20).

7. A flexible joint as claimed in Claim 6, characterizec in that each said end piece (4,5) presents an annular portion (30;301) superimposed on the corresponding end (11,12) of the braided wire sheath (8).

8. A flexible joint as claimed in Claim 7, characterized in that said annular portion (30) of the end piece (4,5) superimposed on the braided wire sheath (8) is defined by an annular sleeve portion of the end piece larger in diameter than the bellows sleeve (6), and is connected to the corresponding said axial shoulder (21) ofthe end piece (4,5) by means of a weld bead (32).

## Patentansprüche

1. Biegsame Vibrationsdämpfungsverbindung (1; 101; 102; 103; 104) zur mechanischen, fluiddichten Verbindung von zwei Rohrabschnitten, insbesondere zwei Abschnitten (2, 3) eines Fahrzeugauspuffrohres; wobei die Verbindung aufweist: ein Paar im wesentlichen starrer, rohrförmiger Endstücke (4, 5), die an entsprechende gegenüberliegende Enden der Rohrabschnitte (2, 3) anfügbar sind eine Metallwellrohrmuffe (6), die eine Anzahl von Wellen (7) zur Elastisch-Verformbarmachung aufweist und deren entgegengesetzte Enden (9, 10) mit den entsprechenden Endstücken (4, 5) einstückig verbunden sind; einen Litzendrahtmantel (8), der die Wellrohrmuffe (6) außen umhüllt und auch an entgegengesetzten Enden (11, 12) mit den Endstücken (4, 5) verbunden ist; und mindestens ein ringförmiges Polster (16; 161; 163), das aus zusammengedrücktem Draht besteht; dadurch gekennzeichnet, daß das ringförmige Polster (16; 161; 163) zwischen die Wellrohrmuffe und den Litzendrahtmantel (8) eingefugt ist, festgehalten in direktem Kontakt zwischen dem letzteren und mindestens einer der Wellen (7) der Wellrohrmuffe (6) oder zumindest mit deren höchstem Punkt (17), um effektiv als Vibrationsdämpfungselement zu wirken.

2. Biegsame Verbindung (1) nach Anspruch 1, dadurch gekennzeichnet, daß sie ein Vibrationsdämpfungspolster (16) in Form einer zylindrischen Muffe mit einer solchen Länge aufweist, um mit mindestens einer der Wellen (7) der Wellrohrmuffe (6) zusammenzuwirken.

3. Biegsame Verbindung (101; 102) nach Anspruch 1, dadurch gekennzeichnet, daß sie mindestens ein Vibrationsdämpfungspolster (161) in Form eines ringförmigen Elements aufweist, das mit der Kontur der Wellen (7) der Wellrohrmuffe (6) korrespondiert und in den ringförmigen Spalt zwischen mindestens zwei beliebigen benachbarten Wellen (7) eingefügt ist, um auf beiden Seiten mit denselben zusammenzuwirken.

4. Biegsame Verbindung (103; 104) nach Anspruch 1, 2 oder 3, dadurch gekennzeichnet, daß sie ein Vibrationsdämpfungspolster (163) in Form eines ringförmigen Elements aufweist, das an einen zylindrischen, einen kleinen Durchmesser aufweisenden, nichtgewellten Abschnitt (62) der Wellrohrmuffe (6) angefügt ist; wobei das Polster (163) zwischen einer Endwelle (7a) der Wellrohrmuffe (6) und einer ringförmigen Schulter (21) am entsprechenden Endstück (4, 5) festgehalten wird, um einen entsprechenden Abschnitt des Endabschnitte (11, 12) gegen die Schulter (21) des Litzendrahtmantels (8) zu klemmen.

5. Biegsame Verbindung (104) nach Anspruch 4, dadurch gekennzeichnet, daß das Vibrationsdämpfungspolster (163) in Form eines ringförmigen Elements durch einen ringförmigen Muffenabschnitt (30) des entsprechenden Endstücks (4, 5), mit dem Litzendrahtmantel (8) dazwischen, außen festgehalten wird.

6. Biegsame Verbindung nach einem der vorhergehenden Ansprüche, dadurch gekennzeichnet, daß jedes Endstück (4, 5) einen zylindrischen Rohrabschnitt (20) zur Verbindung mit dem entsprechenden Rohrabschnitt (2, 3); und eine axiale Schulter (21) aufweist, die durch permanente Verformung eines entsprechenden ringförmigen Abschnitts des zylindrischen Rohrabschnitts (20) gebildet wird.

7. Biegsame Verbindung nach Anspruch 6, dadurch gekennzeichnet, daß jedes Endstück (4, 5) einen ringformigen Abschnitt (30; 301) aufweist, der auf dem entsprechenden Ende (11, 12) des Litzendrahtmantels (8) angeordnet ist.

8. Biegsame Verbindung nach Anspruch 7, dadurch gekennzeichnet, daß der rohrförmige Abschnitt (30) des Endstücks (4, 5), der auf dem Litzendrahtmantel (8) angeordnet ist, durch einen ringförmigen Muffenabschnitt des Endstücks definiert ist, der einen größeren Durchmesser hat als die Wellrohrmuffe (6) und mit der entsprechenden axialen Schulter (21) des Endstücks (4, 5) mittels einer Schweißlage (32) verbunden ist.

## Revendications

1. Joint flexible d'amortissement de vibrations (1 ;101 ;102 ;103 ;104) pour le raccord mécanique étanche au fluide de deux parties de conduites, en particulier deux parties (2,3) d'un tuyau d'échappement ; le joint comprenant: une paire d'éléments d'extrémité tubulaire sensiblement rigide (4,5) pouvant être fixée sur les extrémités en regard des parties de tuyau (2,3); un manchon à soufflet mécanique (6) présentant un certain nombre d'ondulations (7) pour le rendre élastiquement déformable, et dont les extrémités opposées (9, 10) sont raccordées solidairement avec les éléments d'extrémités (4,5); une gaine de fils tressés (8,) recouvrant extérieurement le manchon à soufflet (6) et également raccordée sur les extrémités opposées (11, 12) aux parties d'extrémités (4,5); et au moins un tampon annulaire (16 ;161 ;163) réalisé à partir de fils compressés ; caractérisé en ce que le tampon annulaire (16 ;161 ;163) est introduit entre le manchon à soufflet (6) et la gaine de fils tressés (8), serti en contact direct d'entre ce dernier et au moins l'une des ondulations (7) du manchon à soufflet (6) au moins avec son sommet (17) de façon à servir d'élément amortisseur de vibrations de façon efficace.

2. Joint flexible (1) selon la revendication 1, caractérisé en ce qu'il comprend un tampon amortisseur de vibrations (16) sous forme de manchon cylindrique d'une longueur permettant de coopérer avec au moins une partie des ondulations (7) du manchon à soufflet (6).

3. Joint flexible (101 ;102) selon la revendication 1, caractérisé en ce qu'il comprend au moins un tampon amortisseur des vibrationss (161) sous forme d'élément annulaire conjugué avec le contour des ondulations (7) du manchon à soufflet (6) et introduit dans l'espace annulaire entre au moins deux ondulations contiguës (7) de façon à coopérer de chaque côté avec celle-ci.

4. Joint flexible (103 ;104) selon la revendication 1, 2 ou 3, caractérisé en ce qu'il comprend un tampon amortisseur de vibrations (163) sous forme d'éléments annulaires fixés sur une portion non ondulée de petit diamètre cylindrique (62) du manchon à soufflet (6), le tampon (163) étant serti entre une ondulation d'extrémité (7a) du manchon à soufflet (6) et un épaulement annulaire (21) sur la partie d'extrémité correspondante (4,5) de façon à être serti contre l'épaulement (21) sur une portion correspondante de la portion d'extrémité (11, 12) du manchon à fils tressés (8).

5. Joint flexible (104) selon la revendication 4, caractérisé en ce que le tampon amortisseur de vibrations (163) sous forme d'élément annulaire est serti extérieurement, avec la gaine à fils tressés (8) située en position intermédiaire, par une portion de manchon annulaire (30) de la pièce d'extrémité correspondante (4,5).

6. Joint flexible selon l'une quelconque des revendications précédentes, caractérisé en ce que la partie d'extrémité (4,5) comprend une partie de tube cylindrique (20) pour le raccordement sur une partie de tuyau (2,3) et un épaulement axial (21) formé par déformation permanente d'une portion annulaire respective de la portion de tube cylindrique (20).

7. Raccord flexible selon la revendication 6, caractérisé en ce que chacune des parties d'extrémités (4,5) présente une portion annulaire (30 ;301) superposée sur l'extrémité correspondante (11,12) de la gaine à fils tressés (8).

8. Joint flexible selon la revendication 7, caractérisé en ce que la portion annulaire (30) de la partie d'extrémité (4,5) superposée sur la gaine de fils tressés (8) est définie par une portion de manchon annulaire de la partie d'extrémité d'un diamètre supérieur au manchon à soufflet (6) et raccordés à l'épaulement axial correspondant (21) de la partie d'extrémité (4,5) au moyen d'un cordon de soudure (32).
